# EUROPEAN PATENT SPECIFICATION

(11) **EP 3 517 803 B1**
(45) Date of publication and mention of the grant of the patent: **02.06.2021**
(21) Application number: 19153686.1
(22) Date of filing: 25.01.2019
(51) Int. Cl.: F16F 15/08, F16M 5/00, E02D 27/44, E04B 1/98

(54) **DEVICE FOR INSULATING AND/OR DAMPENING VIBRATIONS GENERATED BY A VIBRATING APPARATUS PROVIDED WITH MEANS FOR ATTENUATING THE EFFECTS OF A SEISMIC EVENT**
SCHWINGUNGSDÄMPFUNGSVORRICHTUNG EINER SCHWINGEINRICHTUNG AUFWEISEND MITTEL FÜR DIE VERMINDERUNG DER EFFEKTE EINES ERDBEBENS
AMORTISSEUR DE VIBRATIONS POUR DES MACHINES VIBRANTES AYANT DES MOYENS POUR L'AMORTISSEMENT DES EFFETS DES TREMBLEMENTS DE TERRE

(30) Priority: 30.01.2018 IT 201800002192
(43) Date of publication of application: 31.07.2019
(73) Proprietor: Pantecnica S.p.A., 20149 Milano MI (IT)
(72) Inventor: Fatigati, Davide, 20149 Milano MI (IT); Merlo, Luca, 20149 Milano MI (IT)
(74) Representative: Perani & Partners S.p.A.

(56) References cited:
- EP-A1- 2 759 737
- EP-A2- 1 548 319
- WO-A1-03/093585
- CN-A- 104 352 096
- CN-B- 104 088 943
- JP-U- S60 102 541
- US-A- 2 660 386

## Description

The present invention relates to a device for insulating or dampening the vibrations generated by the typical operation of a vibrating apparatus and discharged to the support plane of the apparatus, which is provided with means for attenuating the effects caused by a possible seismic event.

Several kinds of apparatuses generate during their normal operation vibrations that are discharged on the relative support surface and that need to be eliminated or, at least, dampened even under the normal operating conditions of the apparatuses.

By way of a certainly not exhaustive example, apparatuses generating vibrations as a result of their normal operation may be air treatment plants now widely spread in every civil and industrial sector, servers of electronic data processing plants, uninterruptible power supplies, industrial refrigerators for storing medicines in hospital settings as well as foodstuffs in storage depots, not to mention counters for frozen products installed in large malls.

According to the technique known in the art, the insulation and/or dampening of the vibrations generated by the typical functioning of the vibrating apparatuses, for example of the aforementioned type, is obtained by inserting between the vibrating apparatus and the support on which it rests devices that substantially comprise a pack of elastic elements which, in the consolidated physical modelling, are defined springs, and that can be of various kinds as well as simply helical, made of steel.

This pack of elastic elements, as shown for example in CN 104088943 and in JP 102 541, is supplemented by the presence of elements in the form of rods or pins provided with at least one break-in zone which, in case of a seismic event, in particularly of the undulatory kind, breaks by following the movement of the other dampening elastic devices. Document EP 1 548 319 A2 discloses a vibration isolating damper of the type used in industrial machinery generating oscillating movements or vibrations.

If the building housing the apparatus is equipped with a seismic protection, despite the presence of the interposed elastic element pack, the relative structural rigidity that exists between the device for insulating or dampening the vibrations of the vibrating apparatus and its supporting base (this latter being integral with the structure of the building) can determine the fall or overthrow of the apparatus depending on the intensity of the seismic event, thus causing further damages besides those possibly caused by the earthquake.

Furthermore, the current building technical standards prescribe that the systems and machinery installed in buildings built in seismic risk areas must be rigidly fastened to the buildings, precisely to prevent any falling or overturning during the horizontal displacement caused by the earthquake and deliberately supported by appropriate anti-seismic structural supports.

The object of the present invention is to provide a device for insulating or dampening the vibrations generated by the typical operation of a vibrating apparatus, which is provided with means for uncoupling the rigid connection between the device for insulating or dampening the vibrations of the vibrating apparatus and its support, upon the arrival of a seismic event, particularly of the undulatory type, with an intensity higher than a preset intensity.

This and other objects that will best appear from the following description are achieved by a device for insulating or dampening the vibrations of a vibrating apparatus, which is characterized in accordance with the following claim 1.

The invention will now be described in greater detail with reference to a preferred embodiment thereof, given only by way of a non-limiting example, shown in the attached drawings, in which:
- Figure 1 shows a schematic vertical section of the device according to the invention for uncoupling the connection between the device for insulating or dampening the vibrations generated by a vibrating apparatus and the base of the apparatus in case of a seismic event;
- Figure 2 shows a schematic plan view of the device of Figure 1;
- Figure 3 shows a schematic view in vertical section of the device of Figure 1 arranged on a pack of elastic elements for insulating or dampening the vibrations generated by a vibrating apparatus, showing its behaviour upon arrival of a seismic event of an undulatory type;
- Figure 4 shows a schematic view in vertical section of the device of Figure 1 arranged on a pack of elastic elements for insulating or dampening the vibrations generated by a vibrating apparatus, showing its behaviour at the end of a seismic event of an undulatory type;
- Figure 5 shows a perspective view of a ball-shaped sliding element used in the device according to the invention;
- Figure 6 shows a side view, partially in section, of the ball-shaped sliding element of Figure 5.

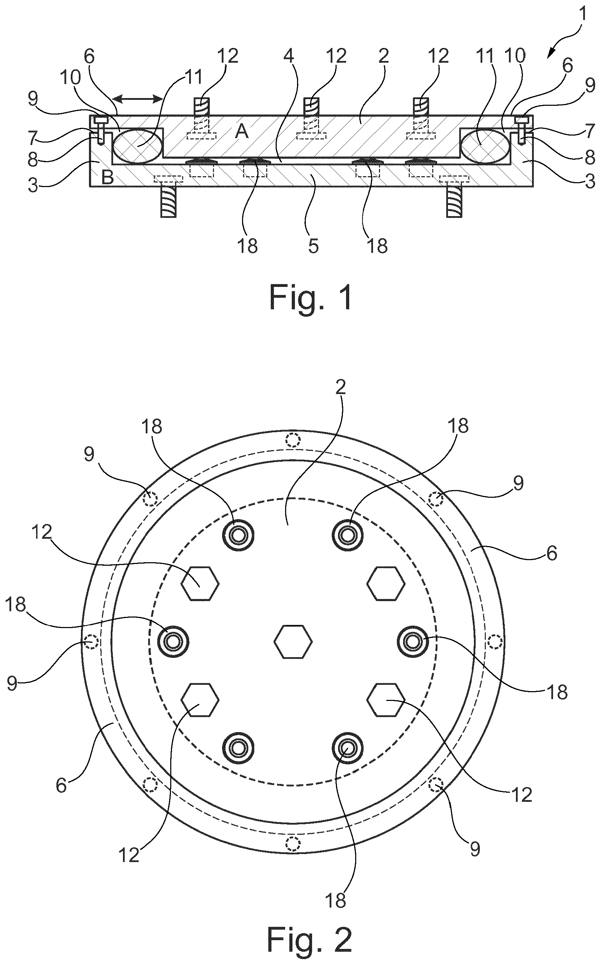

With reference to the aforesaid figures and in particular to Figures 1 and 2, the device according to the invention, indicated as a whole by 1, comprises a first plate-like element 2 having a circular shape in plan view, as shown in Figure 2, as well as a second plate-like element 5 provided with an edge 3 extending perpendicular with respect to the plane of the element 5 and defining, inside it, a cylindrical gap 4.

The plate-like element 2 is superimposed on the plate-like element 5 and has a radial edge 6 that overlaps the end 7 of the edge 3 of the plate-like element 5.

A plurality of rod-like mechanical members 8, in the form of pins provided with a respective head 9, are circumferentially distributed along the edge 6 of the element 2 and are perpendicularly engaged in respective seats 8a, formed in the edge 3 of the plate-like element 5, thus causing a stable connection between the two plate-like elements 2 and 5 on the horizontal plane parallel to the one of the plate-like elements.

The aforesaid rod-like mechanical members 8, based on the material used for their manufacture, have a size designed to withstand the strains occurring during the normal operation of the device 1 for insulating or dampening the vibrations but such as to allow their breakage in the event of an anomalous strain, higher that a preset threshold, transverse to their axial extension, such as the one that may occur in case of an undulatory seismic event.

The gap 4, as shown in Figure 1, extends circumferentially by forming an annular groove 10 housing an elastically deformable element, preferably of a toroidal shape, indicated with 11.

To carry out its function of isolating and/or dampening the vibrations generated by a vibrating apparatus, not shown on the drawings, the device 1 is meant to be rigidly connected to the apparatus by means of the plate-like element 2 through conventional screw means schematised in 12 on the drawings.

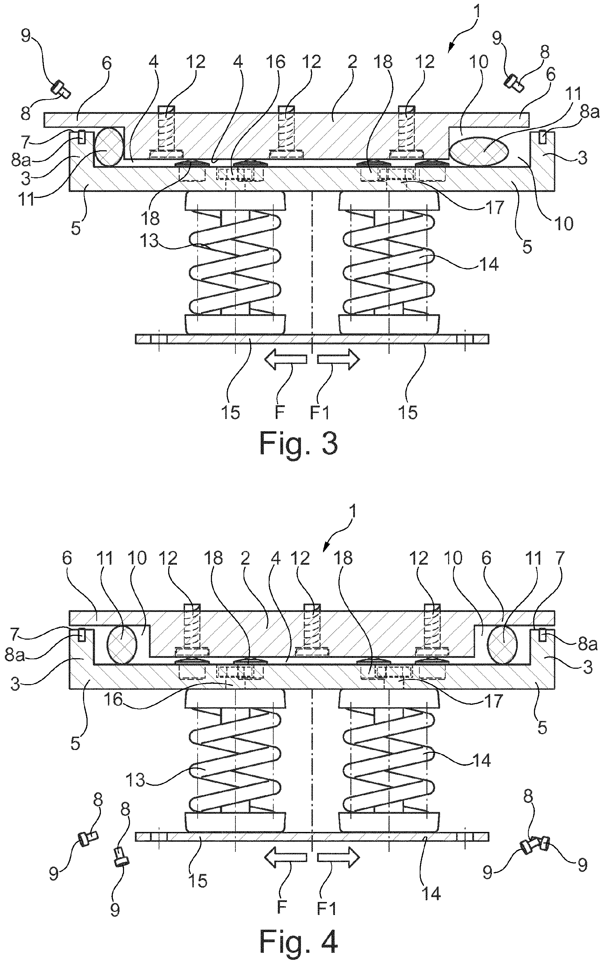

The vibrations generated by the apparatus and that would be discharged to the support of the apparatus to which the device 1 is connected are conventionally dampened by a pack of elastic elements, such as, for example, the helical springs indicated by 13 and 14 in Figures 3 and 4, arranged between the device 1 and the support plane of the apparatus. In Figures 3 and 4, this support plane has been schematically represented by the plate 15, which in turn is part of the base and therefore also of the structure of the building where the apparatus is installed.

The connection of the device 1 to the support plate or base 15 is obtained by means of screws 16 and 17 axially passing through the helical springs 13 and 14, which engage on the one side the plate-like element 5 of the device 1 and on the other side the plate 15.

In accordance with the invention, when a seismic event occurs, particularly of an undulatory type, once exceeded a certain intensity, the movement schematized by the arrows F and F1 in Figures 3 and 4 acting mainly on a horizontal plane causes the breakage of the rod-like mechanical members or pins 8 that rigidly connect the plate-like element 2 to the plate-like element 5 under normal conditions, when only the vibrations of the protected apparatus are to be dampened.

The breakage of the pins 8 allows the plate-like elements 2 and 5 to slide horizontally relative to one another, their displacement being resiliently opposed by the toroidal element 11 housed in the annular groove 10, as schematically shown in Figure 3. When the seismic event ceases, the device, thanks to the presence of the toroidal elastic element 11, comes back to its normal position as shown in Figure 4 and, after checking its state of conservation, its original integrity can be restored by replacing the broken pins 8 with a new group of intact pins.

The relative horizontal sliding of the plate-like elements 2 and 5 can be facilitated and favoured by the presence of rolling members 18, distributed in the plate-like element 5 in the area surrounding the gap 4.

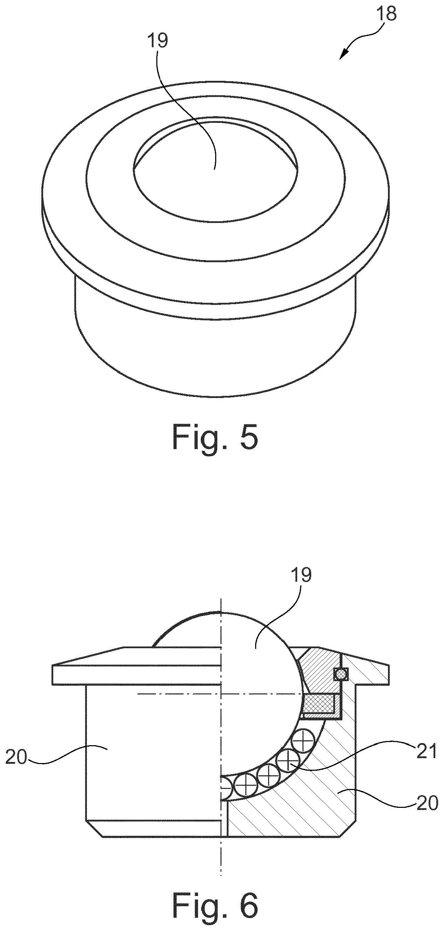

As an example, as shown in Figures 5 and 6, each of the rolling members 18 comprises a ball 19, housed in a relative support 20 with the interposition of other balls 21.

The invention is susceptible of various embodiments to be considered equivalent, as they fall within the scope of the following claims.

## Claims

1. Device (1) for insulating and/or dampening vibrations generated by the operation of a vibrating apparatus, comprising a first plate-like element (2) designed to be connected to the vibrating apparatus, a second plate-like element (5) designed to be connected to the base (15) of the vibrating apparatus, wherein the second plate-like element (5) is provided with an edge (3) extending perpendicular with respect to the plane of said second plate-like element (5), wherein the first plate-like element (2) is superimposed on the second plate-like element (5) and has a radial edge (6) that overlaps the end (7) of the edge (3) of the second plate-like element (5), means (13, 14) for dampening the vibrations generated by said vibrating apparatus interposed between said second plate-like element (5) and said base (15), a plurality of rod-like mechanical members (8), which can be broken when invested by a force acting transversely to their axial extension with an intensity higher than a preset value, an annular groove (10) formed between said first plate-like element (2) and said second plate-like element (5) and an element (11) made of elastically deformable material arranged within said groove (10), wherein the plurality of rod-like mechanical members (8) are circumferentially distributed along the edge (6) of the first plate-like element (2) and are perpendicularly engaged in respective seats (8a) formed in the edge (3) of the second plate-like element (5), so as to cause a stable connection between the first plate-like element (2) and the second plate-like element (5) on the horizontal plane parallel to the one of the plate-like elements.

2. Device according to claim 1, **characterized in that** rolling members (18) are inserted between said first (2) and said second (5) plate-like element to allow the relative sliding of said plate-like elements (2, 5) when said rod-like elements (8) are broken.

## Patentansprüche

1. Vorrichtung zum Isolieren und/oder Dämpfen von Vibrationen, die durch den Betrieb einer Vibrationsvorrichtung erzeugt werden, umfassend ein erstes plattenförmiges Element (2), das dazu bestimmt ist, mit der Vibrationsvorrichtung verbunden zu werden, ein zweites plattenförmiges Element (5), das dazu bestimmt ist, mit der Basis (15) der Vibrationsvorrichtung verbunden zu werden, wobei das zweite plattenförmige Element (5) mit einer Kante (3) versehen ist, die sich senkrecht zu der Ebene des zweiten plattenförmigen Elements (5) erstreckt, wobei das erste plattenförmige Element (2) dem zweiten plattenförmigen Element (5) überlagert ist und eine radiale Kante (6) aufweist, die das Ende (7) der Kante (3) des zweiten plattenförmigen Elements (5) überlappt, Mittel (13, 14) zum Dämpfen der Vibrationen, die von der Vibrationsvorrichtung erzeugt werden, die zwischen dem zweiten plattenförmigen Element (5) und der Basis (15) angeordnet sind, eine Vielzahl von stabförmigen mechanischen Elementen (8), die gebrochen werden können, wenn sie durch eine Kraft eingesetzt werden, die quer zu ihrer axialen Ausdehnung mit einer Intensität wirkt, die höher als ein voreingestellter Wert ist, eine ringförmige Nut (10), die zwischen dem ersten plattenförmigen Element (2) und dem zweiten plattenförmigen Element (5) ausgebildet ist, und ein Element (11), das aus elastisch verformbarem Material hergestellt ist, das innerhalb der Nut (10) angeordnet ist, wobei die Vielzahl von stabförmigen mechanischen Elementen (8) in Umfangsrichtung entlang der Kante (6) des ersten plattenförmigen Elements (2) verteilt sind und senkrecht in jeweilige Aufnahmen (8a) eingreifen, die in der Kante (3) des zweiten plattenförmigen Elements (5) ausgebildet sind, um eine stabile Verbindung zwischen dem ersten plattenförmigen Element (2) und dem zweiten plattenförmigen Element (5) in der horizontalen Ebene parallel zu dem einen der plattenförmigen Elemente zu bewirken.

2. Vorrichtung nach Anspruch 1, **dadurch gekennzeichnet, dass** Rollelemente (18) zwischen das erste (2) und das zweite (5) plattenförmige Element eingesetzt sind, um das relative Gleiten der plattenförmigen Elemente (2, 5) zu ermöglichen, wenn die stabförmigen Elemente (8) gebrochen sind.

## Revendications

1. Dispositif pour isoler et/ou amortir des vibrations générées par le fonctionnement d'un appareil vibrant, comprenant un premier élément en forme de plaque (2) conçu pour être relié à l'appareil vibrant, un second élément en forme de plaque (5) conçu pour être relié à la base (15) de l'appareil vibrant, où le second élément en forme de plaque (5) est pourvu d'un bord (3) s'étendant perpendiculairement par rapport au plan dudit second élément en forme de plaque (5), où le premier élément en forme de plaque (2) est superposé au second élément en forme de plaque (5) et a un bord radial (6) qui chevauche l'extrémité (7) du bord (3) du second élément en forme de plaque (5), des moyens (13, 14) pour amortir les vibrations générées par ledit appareil vibrant interposé entre ledit second élément en forme de plaque (5) et ladite base (15), une pluralité d'éléments mécaniques en forme de tige (8), qui peuvent être cassés lorsqu'ils sont soumis à une force agissant transversalement à leur extension axiale avec une intensité supérieure à une valeur prédéterminée, une rainure annulaire (10) formée entre ledit premier élément en forme de plaque (2) et ledit second élément en forme de plaque (5) et un élément (11) constitué d'un matériau élastiquement déformable disposé à l'intérieur de ladite rainure (10), où la pluralité d'éléments mécaniques en forme de tige (8) sont réparties circonférentiellement le long du bord (6) du premier élément en forme de plaque (2) et sont engagées perpendiculairement dans des sièges respectifs (8a) formés dans le bord (3) du second élément en forme de plaque (5), de manière à provoquer une liaison stable entre le premier élément en forme de plaque (2) et le second élément en forme de plaque (5) sur le plan horizontal parallèle à l'un des éléments en forme de plaque.

2. Dispositif selon la revendication 1, **caractérisé en ce que** des éléments roulants (18) sont insérés entre lesdits premier (2) et second (5) éléments en forme de plaque pour permettre le coulissement relatif desdits éléments en forme de plaque (2, 5) lorsque lesdits éléments en forme de tige (8) sont cassés.
